# EUROPEAN PATENT SPECIFICATION

(11) **EP 3 750 778 B1**
(45) Date of publication and mention of the grant of the patent: **14.05.2025**
(21) Application number: 18904628.7
(22) Date of filing: 09.02.2018
(51) Int. Cl.: B61L 29/00, B61L 29/30, B61L 23/04, G01S 7/481, G01S 7/497, G01S 17/42, G01S 17/88, G01S 17/931

(54) **OBSTACLE DETECTION SYSTEM**
HINDERNISDETEKTIONSSYSTEM
SYSTÈME DE DÉTECTION D'OBSTACLE

(43) Date of publication of application: 16.12.2020
(73) Proprietor: IHI CORPORATION, Koto-ku, Tokyo 135-8710 (JP)
(72) Inventor: TOJIMA, Narifumi, Koto-ku, Tokyo 135-8710 (JP); OTA, Nao, Koto-ku, Tokyo 135-8710 (JP); SHIZUME, Dai, Koto-ku, Tokyo 135-8710 (JP); ISHIKAWA, Hikaru, Koto-ku, Tokyo 135-8710 (JP); HASHIZUME, Sho, Koto-ku, Tokyo 135-8710 (JP); MAEDA, Munehiko, Koto-ku, Tokyo 135-8710 (JP)
(74) Representative: MERH-IP Matias Erny Reichl Hoffmann Patentanwälte PartG mbB
(86) International application number: PCT/JP2018/004663
(87) International publication number: WO 2019/155621

(56) References cited:
- JP-A- 2001 030 906
- JP-A- 2001 199 343
- JP-A- 2005 121 488
- JP-A- 2005 121 488
- JP-A- 2010 095 194
- JP-A- 2012 237 724
- JP-A- 2017 154 528
- JP-A- 2017 154 528
- JP-A- S6 040 978

## Description

### Technical Field

The present disclosure relates to an obstacle detection system.

### Background Art

A device for detecting obstacles inside a level crossing is known. For example, Patent Literatures 1 to 4 describe level crossing obstacle detection devices (obstacle detection systems) that transmit a radio wave within a region including a level crossing and receive a reflected wave to the radio wave to detect an obstacle.

### Citation List

### Patent Literature

Patent Literature 1: Japanese Unexamined Patent Publication No. JP 2012-101643
Patent Literature 2: Japanese Unexamined Patent Publication No. JP 2017-154528
Patent Literature 3: Japanese Unexamined Patent Publication No. JP 2010-095194
Patent Literature 4: Japanese Unexamined Patent Publication No. JP 2005-121488

### Summary of Invention

### Technical Problem

Since electromagnetic waves such as electric waves and laser light are attenuated due to deterioration of the external environment such as heavy fog and heavy rain, accuracy of obstacle detection may be reduced depending on the state of the external environment. Thus, the obstacle detection system may output a signal indicating a failure of the obstacle detection system to a level crossing control device when the external environment deteriorates.

However, when the signal indicating a failure of the obstacle detection system is output, it may be required to cut off an electric power supply to the obstacle detection system. Since obstacles are not detected in this case, in order to prevent trains, vehicles, and people from entering train tracks from the viewpoint of safety, a stop signal may be output, and a crossing gate may be in a state of coming down.

The present disclosure describes an obstacle detection system that can continue to operate even when the external environment deteriorates.

### Solution to Problem

According to a first aspect the invention provides an obstacle detection system in accordance with claim 1. Further aspects of the invention are set forth in the dependent claims, the drawings and the following description of embodiments. An obstacle detection system according to one aspect of the present disclosure is a system that detects an obstacle inside a level crossing. The obstacle detection system includes a detection unit that applies an electromagnetic wave to a reflector installed at the level crossing and receives a reflected wave of the electromagnetic wave, a control unit that determines an environmental state inside the level crossing based on the reflected wave, and an output unit that outputs an obstacle presence/absence signal indicating presence of the obstacle to an outside when the control unit determines that the environmental state is abnormal.

### Advantageous Effects of Invention

The present disclosure can provide an obstacle detection system that can continue to operate even when the external environment deteriorates.

### Brief Description of Drawings

FIG. 1 is a schematic configuration diagram of a level crossing control system including an obstacle detection system according to an embodiment.
FIG. 2 is a diagram illustrating a configuration example of a detection unit illustrated in FIG. 1.
FIG. 3 is a diagram for explaining a detection region at a level crossing.
FIG. 4 is a schematic configuration diagram of a reflector provided in the detection region illustrated in FIG. 3.
FIG. 5 is a diagram illustrating a configuration example of an input/output unit illustrated in FIG. 1.

### Description of Embodiments

Since an embodiment according to the present disclosure to be described below is illustrative to describe the present invention, the present invention should not be limited to the following contents.

### [1] Outline of Embodiment

An obstacle detection system according to one aspect of the present disclosure is a system that detects an obstacle inside a level crossing. The obstacle detection system includes a detection unit that applies an electromagnetic wave to a reflector installed at the level crossing and receives a reflected wave of the electromagnetic wave, a control unit that determines an environmental state inside the level crossing based on the reflected wave, and an output unit that outputs an obstacle presence/absence signal indicating presence of the obstacle to an outside when the control unit determines that the environmental state is abnormal.

In the obstacle detection system, the electromagnetic wave is applied to a reflector installed at the level crossing, an environmental state inside the level crossing is determined based on a reflected wave of the electromagnetic wave, and when the environmental state is determined to be abnormal, an obstacle presence/absence signal indicating presence of an obstacle is output to the outside. As described above, abnormality of the environmental state is output to the outside as the presence of the obstacle, not as a failure of the obstacle detection system. When the obstacle presence/absence signal is output, it is not required to cut off an electric power supply to the obstacle detection system, and thus the obstacle detection system can continue to operate even when the external environment deteriorates.

The detection unit applies the electromagnetic wave to a detection region, including a monitor region set inside the level crossing and the reflector, so as to scan the detection region and may receive the reflected wave. The control unit may determine whether or not an obstacle is present in the monitor region based on the reflected wave from the monitor region. The output unit may output the obstacle presence/absence signal when the control unit determines that the obstacle is present. In this case, by applying the electromagnetic wave so as to scan the detection region, it is possible to determine the presence/absence of an obstacle and the environmental state.

The detection unit further has an internal path capable of propagating the electromagnetic wave. The detection unit may allow the electromagnetic wave to enter at a first end of the internal path and receive an emitted wave emitted from a second end of the internal path. The control unit may determine whether or not the detection unit has failed based on the emitted wave. In this case, it is possible to determine a failure of the detection unit, such as insufficient electromagnetic wave intensity.

The control unit may determine the environmental state when determining that the detection unit has not failed. When the detection unit has failed, the detection unit may not be able to accurately determine the environmental state. Thus, when it is determined that the detection unit has not failed, the environmental state is determined, so that it is possible to improve determination accuracy of the environmental state.

The control unit may determine whether or not the obstacle detection system has failed. The output unit may output a state signal indicating a failure of the obstacle detection system to the outside when the control unit determines that the obstacle detection system has failed. In this case, the failure of the obstacle detection system can be notified to the outside.

The obstacle detection system may further include a power switch for switching between an ON state in which electric power is supplied to the obstacle detection system and an OFF state in which the electric power supply to the obstacle detection system is cut off. The power switch may be switched to the OFF state when the output unit outputs the state signal. In this case, when the state signal indicating a failure of the obstacle detection system is output, the electric power supply to the obstacle detection system is cut off. Thus, a malfunction of the obstacle detection system can be prevented.

The detection unit may apply laser light as the electromagnetic wave. In this case, even in the obstacle detection system using the laser light, the obstacle detection system can continue to operate even when the external environment deteriorates.

### [2] Illustration of embodiment

Hereinafter, an embodiment of the present disclosure will be described with reference to the drawings. In the description of the drawings, the same elements will be denoted by the same reference symbols, and description thereof will not be repeated.

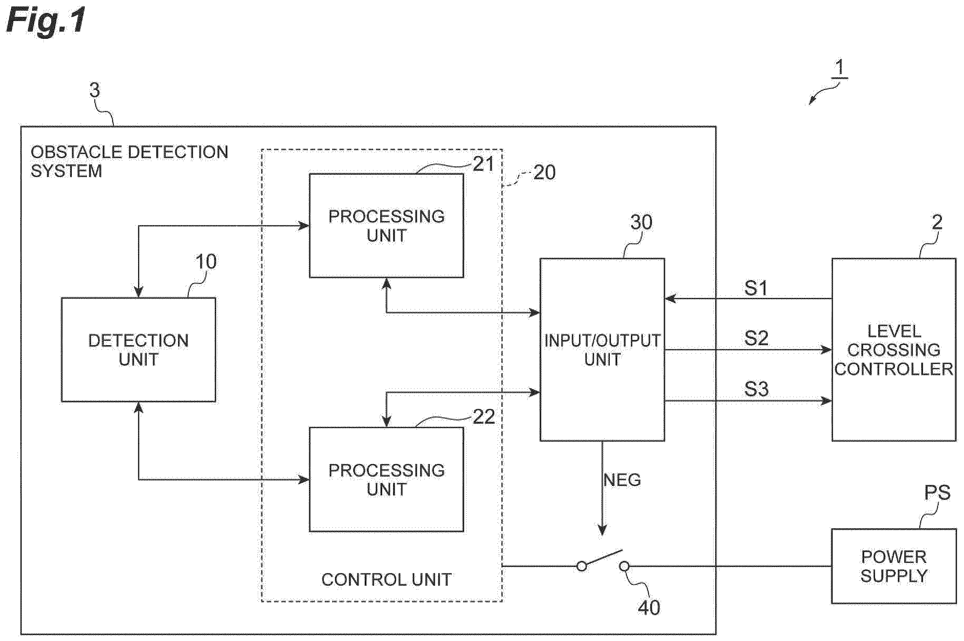

FIG. 1 is a schematic configuration diagram of a level crossing control system including an obstacle detection system according to an embodiment. As illustrated in FIG. 1, a level crossing control system 1 includes a level crossing controller 2 and an obstacle detection system 3. The level crossing controller 2 and the obstacle detection system 3 are connected to each other by signal lines for transmitting and receiving three signals (start/stop signal S1, obstacle presence/absence signal S2, and state signal S3). In the present embodiment, the signal line for transmitting and receiving each signal is duplicated.

The level crossing controller 2 controls level crossing equipment provided at a level crossing. Examples of the level crossing equipment include a crossing gate, an alarm, a level crossing operation reaction light, and a special signal light emitting device. The level crossing controller 2 outputs the start/stop signal S1 to the obstacle detection system 3. The start/stop signal S1 is a signal for instructing the obstacle detection system 3 to start and stop obstacle detection processing. The level crossing controller 2 outputs the start/stop signal S1 indicating the start of the detection processing, for example, in response to approach of a train to the level crossing. The level crossing controller 2 outputs the start/stop signal S1 indicating the stop of the detection processing, for example, in response to passage of a train through the level crossing.

The level crossing controller 2 receives the obstacle presence/absence signal S2 and the state signal S3 from the obstacle detection system 3. The obstacle presence/absence signal S2 is a signal indicating whether or not an obstacle is present inside the level crossing. The state signal S3 is a signal indicating whether the state of the obstacle detection system 3 is normal or abnormal. The level crossing controller 2 causes the special signal light emitting device to display stop in order to prevent a train from entering the level crossing, for example, when the obstacle presence/absence signal S2 indicates that an obstacle is present inside the level crossing. The level crossing controller 2 controls the level crossing equipment so as to prevent trains, vehicles, and people from entering the level crossing, for example, when the state signal S3 indicates that the state of the obstacle detection system 3 is abnormal.

The obstacle detection system 3 is a system that detects obstacles inside the level crossing. The obstacle detection system 3 outputs the obstacle presence/absence signal S2 and the state signal S3 to the level crossing controller 2 (outside). The obstacle detection system 3 receives the start/stop signal S1 from the level crossing controller 2. The obstacle detection system 3 performs the obstacle detection processing when the start/stop signal S1 indicates start. The obstacle detection system 3 stops the obstacle detection processing when the start/stop signal S1 indicates stop.

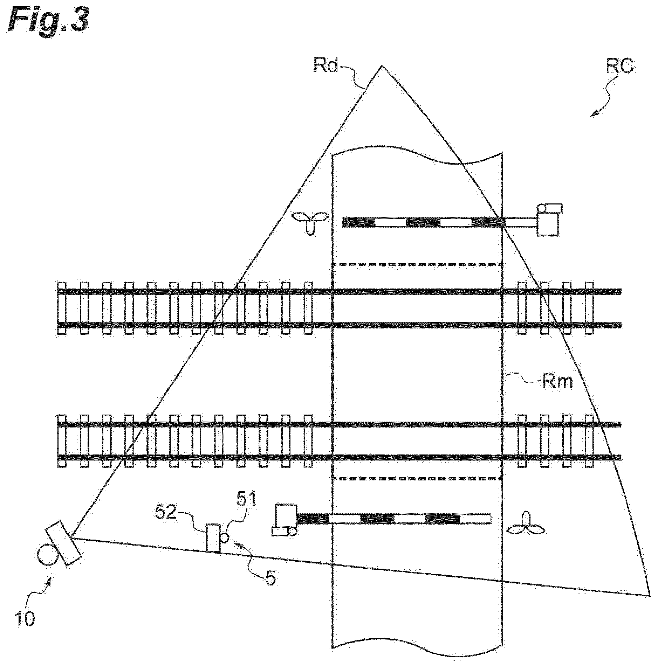

The obstacle detection system 3 includes a detection unit 10, a control unit 20, an input/output unit 30, and a power switch 40. The detection unit 10 is a unit that applies an electromagnetic wave so as to scan a detection region Rd (see FIG. 3) and receives a reflected wave from the detection region Rd. The detection region Rd is a region where the detection unit 10 can detect an obstacle and is a region that can be irradiated with the electromagnetic wave. As the electromagnetic wave, light such as laser light, radio waves such as microwaves, and the like may be used. In the present embodiment, description will be made using laser light as the electromagnetic wave. The control unit 20 is a unit that controls various operations of the obstacle detection system 3. The input/output unit 30 is an input/output interface that transmits and receives signals to and from the level crossing controller 2. Details of the detection unit 10, the control unit 20, and the input/output unit 30 will be described later.

The power switch 40 is connected to an external power supply PS and is an element for switching between an ON state and an OFF state. The ON state is a state in which both ends of the power switch 40 are electrically conducted with each other. When the power switch 40 is in the ON state, electric power is supplied from the power supply PS to the obstacle detection system 3 through the power switch 40. The OFF state is a state in which the both ends of the power switch 40 are electrically disconnected from each other. When the power switch 40 is in the OFF state, the electric power supply to the obstacle detection system 3 is cut off. Examples of the power switch 40 include a semiconductor switch and a mechanical relay. Upon receiving a shutoff signal NEG from the input/output unit 30, the power switch 40 is switched to the OFF state.

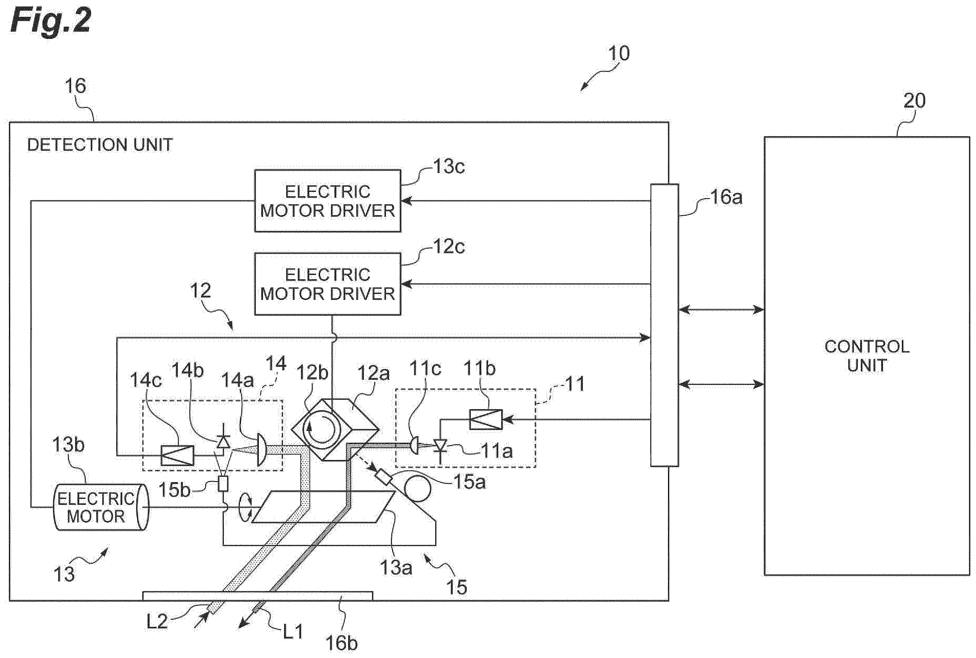

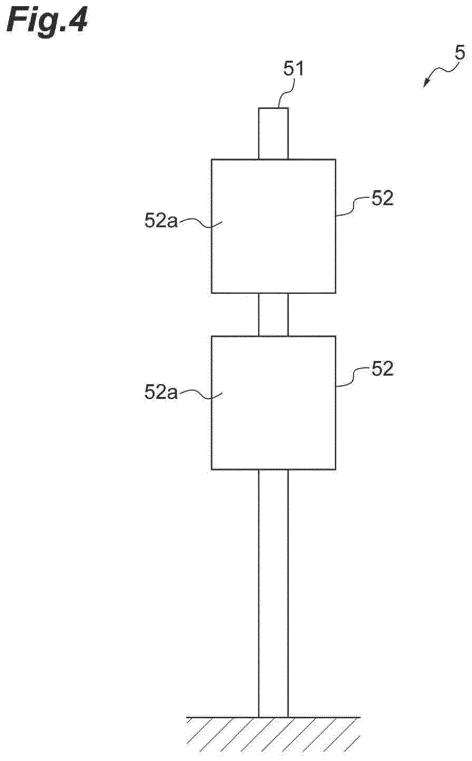

Next, the detection unit 10 will be described in detail with reference to FIGS. 2 to 4. FIG. 2 is a diagram illustrating a configuration example of the detection unit illustrated in FIG. 1. FIG. 3 is a diagram for explaining the detection region at the level crossing. FIG. 4 is a schematic configuration diagram of a reflector provided in the detection region illustrated in FIG. 3.

As illustrated in FIGS. 2 and 3, the detection unit 10 applies laser light L1 to the detection region Rd and receives reflected light L2 from the detection region Rd. The detection unit 10 is a laser radar. The detection unit 10 scans the detection region Rd in a main scanning direction and a sub scanning direction using the laser light L1. Irradiation of the detection region Rd with the laser light L1 is repeated at predetermined time intervals. The detection region Rd includes a monitor region Rm set inside a level crossing RC. The monitor region Rm is a region to be monitored in the detection region Rd, and is, for example, a region where a train track and a road intersect each other in a plane. The detection unit 10 is installed near the level crossing RC.

A columnar structure 5 is installed at the level crossing RC. As illustrated in FIG. 4, the columnar structure 5 includes a column 51 standing upright in the detection region Rd and a reflector 52 attached to the column 51. The reflector 52 has a mirror surface 52a facing the detection unit 10. The mirror surface 52a reflects the laser light L1 emitted from the detection unit 10 and emits the reflected light L2 to the detection unit 10. That is, the reflector 52 is located within the detection region Rd, and the orientation of the mirror surface 52a is adjusted such that the laser light L1 emitted from the detection unit 10 is reflected toward the detection unit 10. The reflector 52 is used to evaluate the environmental state inside the level crossing RC. In the evaluation of the environmental state, it is determined whether the environmental state is normal. The normal environmental state is a state in which obstacle detection can be performed normally. An abnormal environmental state is a state in which obstacle detection accuracy is reduced, and is a state in which a light attenuation rate increases due to, for example, rain, snow, fog, condensation, dust, or the like. The increase in light attenuation rate is caused by diffusion of fine particles.

In the present embodiment, the columnar structure 5 includes the two reflectors 52, but may include one reflector 52, or may include three or more reflectors 52. The larger the number of the reflectors 52, the less the influence of stain and damage on the mirror surface 52a.

The detection unit 10 includes a light emitting unit 11, a main scanning unit 12, a sub scanning unit 13, a light receiving unit 14, and an internal optical path 15 (internal path). In the present embodiment, the detection unit 10 has a housing 16. The light emitting unit 11, the main scanning unit 12, the sub scanning unit 13, the light receiving unit 14, and the internal optical path 15 are housed in the housing 16. The housing 16 is provided with a connector 16a, and a cable is connected to the connector 16a. The detection unit 10 and the control unit 20 are communicably connected via a cable.

The light emitting unit 11 emits pulsed laser light in response to a light projection command from the control unit 20. The light projection command indicates an emission timing of the laser light. The light emitting unit 11 includes a light emitting element 11a, a driver 11b, and a lens 11c. The light emitting element 11a is an element capable of emitting the laser light. As the light emitting element 11a, for example, a semiconductor laser element (laser diode) is used. The driver 11b is a drive circuit for the light emitting element 11a, and causes the light emitting element 11a to emit pulsed laser light and the laser light to be emitted to the lens 11c in response to the light projection command. The lens 11c is a light projection lens. As the lens 11c, for example, a collimating lens is used. The lens 11c collimates the laser light emitted from the light emitting element 11a and emits the collimated laser light to the main scanning unit 12.

The main scanning unit 12 performs scanning by the laser light emitted from the light emitting unit 11 (light emitting element 11a), in the main scanning direction in the detection region Rd. The main scanning unit 12 includes a polygon mirror 12a, an electric motor 12b, and an electric motor driver 12c. The polygon mirror 12a is a polyhedron (in this case, a hexahedron) that can rotate at high speed. The polygon mirror 12a has two side surfaces facing each other in a direction in which a rotation axis of the polygon mirror 12a extends, and four mirror surfaces having the same width and connecting the two side surfaces. The electric motor 12b is an electric motor that rotates the polygon mirror 12a around the rotation axis. The electric motor driver 12c is a drive circuit that rotates the electric motor 12b at a predetermined rotation speed. The laser light emitted from the light emitting element 11a is reflected by the mirror surface of the rotating polygon mirror 12a, so that scanning is performed by the laser light in the main scanning direction.

The sub scanning unit 13 performs scanning by the laser light in the sub scanning direction of the detection region Rd. The sub scanning unit 13 includes a swing mirror 13a, an electric motor 13b, and an electric motor driver 13c. The swing mirror 13a is configured to be swingable around an axis orthogonal to the rotation axis of the polygon mirror 12a. The swing mirror 13a is provided in an emitting direction of the laser light reflected by the polygon mirror 12a and has a mirror surface facing the polygon mirror 12a. The swing mirror 13a is also called a galvanometer mirror. The electric motor 13b is an electric motor that swings the swing mirror 13a. The electric motor driver 13c is a drive circuit that swings the electric motor 13b within a predetermined angle range and at a predetermined timing.

The laser light reflected by the polygon mirror 12a is reflected by a mirror surface of the swinging swing mirror 13a, so that scanning is performed by the laser light in the sub scanning direction. The laser light reflected by the swing mirror 13a is emitted as the laser light L1 to the outside of the detection unit 10 (housing 16) through a window 16b provided in the housing 16, and applied to the detection region Rd while scanning is performed in the main scanning direction and the sub scanning direction. The window 16b is formed of a material such as glass capable of transmitting the laser light L1 and the reflected light L2.

The laser light L1 applied to the detection region Rd is reflected in the detection region Rd and enters as the reflected light L2 the detection unit 10 through the window 16b. The reflected light L2 is sequentially reflected by the swing mirror 13a and the polygon mirror 12a, and enters the light receiving unit 14.

The light receiving unit 14 receives the reflected light and generates a received light signal indicating intensity of the reflected light. The light receiving unit 14 includes a lens 14a, a light receiving element 14b, and an amplifier 14c. The lens 14a is a light receiving lens. As the lens 14a, for example, a condenser lens is used. The lens 14a collects reflected light and emits the collected reflected light to the light receiving element 14b. The light receiving element 14b photoelectrically converts the reflected light to generate the received light signal indicating the intensity of the reflected light. As the light receiving element 14b, for example, a photodiode is used. The light receiving element 14b outputs the received light signal to the amplifier 14c. The amplifier 14c amplifies the received light signal and transmits the amplified received light signal to the control unit 20.

The internal optical path 15 is configured to be able to propagate the laser light. The internal optical path 15 is configured of, for example, an optical fiber. One end 15a of the internal optical path 15 is provided in the emitting direction of the laser light reflected by the polygon mirror 12a. The other end 15b of the internal optical path 15 is disposed toward the light receiving element 14b. The laser light reflected by the polygon mirror 12a enters one end 15a and is emitted from the other end 15b for each main scan. The emitted light emitted from the other end 15b is received by the light receiving element 14b.

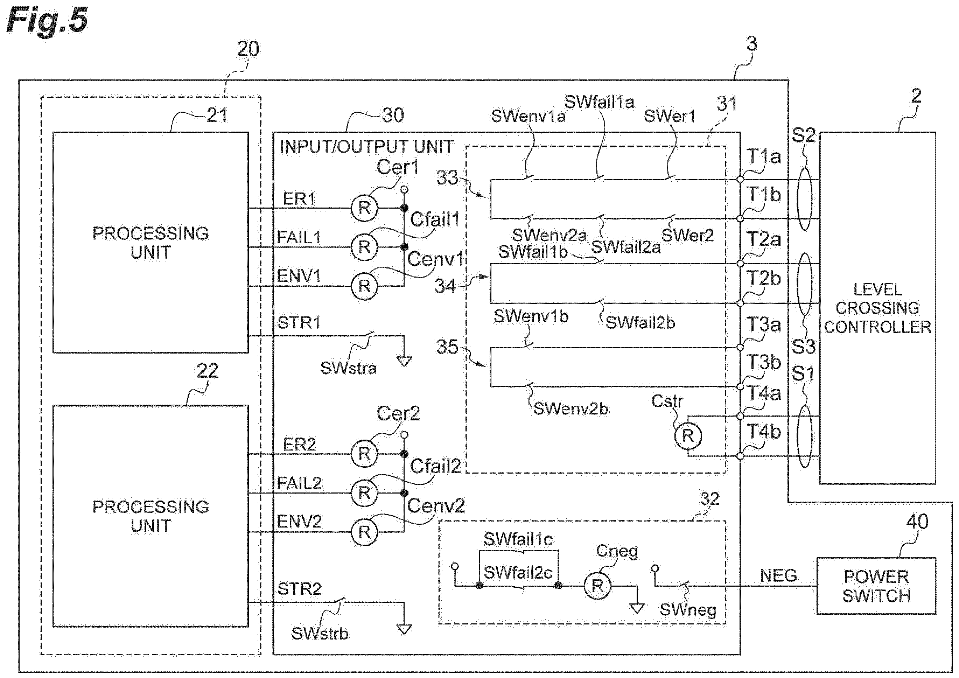

Next, the control unit 20 and the input/output unit 30 will be described in detail with reference to FIGS. 1 and 5. FIG. 5 is a diagram illustrating a configuration example of the input/output unit illustrated in FIG. 1.

As illustrated in FIG. 5, the control unit 20 includes a processing unit 21 and a processing unit 22. The processing unit 21 and the processing unit 22 are configured as a computer including a processor, a main storage device, an auxiliary storage device, and a communication module that communicates with other devices. Examples of the processor include a Central Processing Unit (CPU) and a Digital Signal Processor (DSP). The main storage device includes a Random Access Memory (RAM), a Read Only Memory (ROM), and the like. Examples of the auxiliary storage device include a semiconductor memory and a hard disk device.

The processing unit 21 and the processing unit 22 perform the same processing in parallel with each other. That is, the processing unit 21 and the processing unit 22 constitute a dual system. In the present embodiment, the processing unit 21 is a main device, and a processing unit 22 is a standby device. Since processing unit 21 and the processing unit 22 perform the same processing, the processing unit 21 will be mainly described.

The processing unit 21 starts various pieces of processing when a start signal STR1 output from the input/output unit 30 indicates start, and the processing unit 21 stops the various pieces of processing when the start signal STR1 indicates stop. The processing unit 21 continues to perform processing while the start signal STR1 indicates start, and continues a stop state while the start signal STR1 indicates stop. In the present embodiment, the start signal STR1 indicates start when a voltage level of the start signal STR1 is a low level, and the start signal STR1 indicates stop when the voltage level of the start signal STR1 is a high level. The processing unit 21 may receive the start signal STR1 by a photocoupler provided inside the processing unit 21. In this case, an input terminal of the photocoupler that receives the start signal STR1 is connected to a power supply voltage inside the processing unit 21.

The processing unit 21 transmits the light projection command to the detection unit 10 in order to apply the laser light L1 to the detection region Rd. The processing unit 21 transmits a command regarding the rotation speed of the polygon mirror 12a and the rotation (swing) speed of the swing mirror 13a, etc. to the detection unit 10. The processing unit 21 receives the received light signal, generated based on the reflected light L2 from the detection region Rd, from the detection unit 10. As described above, the detection region Rd includes the monitor region Rm set inside the level crossing RC and the reflector 52 (mirror surface 52a). In the processing unit 21, the position of the monitor region Rm in the detection region Rd and the position of the mirror surface 52a are preset.

The processing unit 21 determines whether or not an obstacle is present in the monitor region Rm based on the reflected light L2 from the monitor region Rm. Specifically, the processing unit 21 calculates a distance from the detection unit 10 to each point in the monitor region Rm based on an irradiation position of the laser light L1, and the received light signal generated based on the reflected light L2 from the monitor region Rm. The distance is calculated as a time interval between a timing when the light projection command is transmitted and a timing when the received light signal is received. Then, the processing unit 21 generates three-dimensional space data indicating a three-dimensional shape of the monitor region Rm from the distance to each point in the monitor region Rm, and performs object recognition using this three-dimensional space data. The processing unit 21 determines whether or not the recognized object is an obstacle using a determination condition such as a level crossing warning.

The processing unit 21 outputs an obstacle signal ER1 indicating the presence/absence of an obstacle to the input/output unit 30 based on the determination result of the presence/absence of the obstacle. In the present embodiment, the processing unit 21 sets the obstacle signal ER1 to the ON state when determining that no obstacle is present, and sets the obstacle signal ER1 to the OFF state when determining that an obstacle is present. The obstacle signal ER1 is an electric current signal, and electric current is supplied when the obstacle signal ER1 is in the ON state, and no electric current is supplied when the obstacle signal ER1 is in the OFF state. The processing unit 21 may set the state (ON state or OFF state) of the obstacle signal ER1 by using the photocoupler provided inside the processing unit 21, for example.

The processing unit 21 determines the environmental state inside the level crossing RC based on the reflected light L2 reflected by the reflector 52 (mirror surface 52a). Specifically, the processing unit 21 compares intensity (received light signal) of the reflected light L2 reflected by the reflector 52 with an environmental threshold. The environmental threshold is preset in the processing unit 21. The environmental threshold is set to, for example, intensity that makes it impossible to detect an obstacle having the lowest reflection intensity among the obstacles to be detected. For example, when the level crossing control system 1 is installed, the processing unit 21 controls the detection unit 10 to apply the laser light L1 to the reflector 52 (mirror surface 52a). The processing unit 21 obtains the received light signal generated based on the reflected light L2 reflected by the reflector 52 and sets a multiplication result of the received light signal and a predetermined coefficient as the environmental threshold in a storage device (memory). The processing unit 21, for example, determines that the environmental state is normal when the intensity of the reflected light L2 is equal to or more than the environmental threshold, and determines that the environmental state is abnormal when the intensity of the reflected light L2 is less than the environmental threshold.

The processing unit 21 outputs an environmental signal ENV1, indicating whether the environmental state is normal or abnormal, to the input/output unit 30 based on the determination result of the environmental state. In the present embodiment, the processing unit 21 sets the environmental signal ENV1 to the ON state when determining that the environmental state is normal, and sets the environmental signal ENV1 to the OFF state when determining that the environmental state is abnormal. The environmental signal ENV1 is an electric current signal, and electric current is supplied when the environmental signal ENV1 is in the ON state, and no electric current is supplied when the environmental signal ENV1 is in the OFF state. The processing unit 21 may set the state (ON state or OFF state) of the environmental signal ENV1 by using the photocoupler provided inside the processing unit 21, for example.

The processing unit 21 determines whether or not the obstacle detection system 3 has failed. Examples of failures of the obstacle detection system 3 include failures of each part included in the obstacle detection system 3. For example, the processing unit 21 determines whether or not the detection unit 10 has failed based on the emitted light emitted from the other end 15b of the internal optical path 15. Specifically, the processing unit 21 compares intensity (received light signal) of the emitted light emitted from the other end 15b with an intensity threshold. The intensity threshold is preset in the processing unit 21. For example, when the level crossing control system 1 is installed, the processing unit 21 controls the detection unit 10 to apply the laser light to one end 15a of the internal optical path 15. The processing unit 21 obtains the received light signal generated based on the emitted light emitted from the other end 15b and sets multiplication result of the received light signal and a predetermined coefficient as the intensity threshold in the storage device (memory). The processing unit 21, for example, determines that the detection unit 10 has not failed (normal) when the intensity of the emitted light is equal to or higher than the intensity threshold, and determines that the detection unit 10 has failed when the intensity of the emitted light is less than the intensity threshold.

The processing unit 21 outputs a failure signal FAIL1, indicating whether or not the obstacle detection system 3 has failed, to the input/output unit 30 based on the failure determination result. In the present embodiment, the processing unit 21 sets the failure signal FAIL1 to the ON state when determining that the obstacle detection system 3 is normal, and sets the failure signal FAIL1 to the OFF state when determining that the obstacle detection system 3 has failed. The failure signal FAIL1 is an electric current signal, and electric current is supplied when the failure signal FAIL1 is in the ON state, and no electric current is supplied when the failure signal FAIL1 is in the OFF state. The processing unit 21 may set the state (ON state or OFF state) of the failure signal FAIL1 by using the photocoupler provided inside the processing unit 21, for example.

When determining that the detection unit 10 (obstacle detection system 3) has not failed, the processing unit 21 may determine the environmental state and the presence/absence of an obstacle.

The processing unit 22 starts various pieces of processing when a start signal STR2 output from the input/output unit 30 indicates start, and the processing unit 22 stops the various pieces of processing when the start signal STR2 indicates stop. Similar to the processing unit 21, the processing unit 22 determines the presence/absence of an obstacle, the environmental state, and the failure of the obstacle detection system 3. The processing unit 22 outputs an obstacle signal ER2 indicating the presence/absence of an obstacle to the input/output unit 30 based on the determination result of the presence/absence of the obstacle. The processing unit 22 outputs an environmental signal ENV2, indicating whether the environmental state is normal or abnormal, to the input/output unit 30 based on the determination result of the environmental state. The processing unit 22 outputs a failure signal FAIL2, indicating whether or not the obstacle detection system 3 has failed, to the input/output unit 30 based on the failure determination result. Since the obstacle signal ER2, the environmental signal ENV2, and the failure signal FAIL2 are similar to the obstacle signal ER1, the environmental signal ENV1, and the failure signal FAIL1, respectively, detailed description thereof will be omitted.

Although the processing unit 22 generates a light projection command and the like similarly to the processing unit 21, the light projection command and the like are not transmitted to the detection unit 10.

When the control unit 20 determines that the obstacle detection system 3 has failed, the input/output unit 30 outputs the state signal S3 indicating abnormality of the obstacle detection system 3 (failure of the obstacle detection system 3) to the level crossing controller 2. When the control unit 20 determines that the obstacle detection system 3 has not failed, the input/output unit 30 outputs the state signal S3, indicating normality of the obstacle detection system 3 to the level crossing controller 2.

In the present embodiment, since the control unit 20 is duplicated, when at least one of the processing unit 21 and the processing unit 22 determines that the obstacle detection system 3 has failed, the input/output unit 30 outputs the state signal S3 indicating abnormality of the obstacle detection system 3 to the level crossing controller 2. That is, when at least one of the failure signal FAIL1 and the failure signal FAIL2 is in the OFF state, the input/output unit 30 outputs the state signal S3 indicating abnormality of the obstacle detection system 3 to the level crossing controller 2. When both the processing unit 21 and the processing unit 22 determine that the obstacle detection system 3 has not failed, the input/output unit 30 outputs the state signal S3 indicating normality of the obstacle detection system 3 to the level crossing controller 2. That is, when the failure signal FAIL1 and the failure signal FAIL2 are both in the ON state, the input/output unit 30 outputs the state signal S3 indicating normality of the obstacle detection system 3 to the level crossing controller 2.

When the control unit 20 determines that an obstacle is present in the level crossing RC (monitor region Rm), the input/output unit 30 outputs the obstacle presence/absence signal S2 indicating the presence of the obstacle to the level crossing controller 2. When the control unit 20 determines that the environmental state is abnormal, the input/output unit 30 outputs the obstacle presence/absence signal S2 indicating the presence of an obstacle to the level crossing controller 2. Furthermore, when the control unit 20 determines that the obstacle detection system 3 has failed, the input/output unit 30 outputs the obstacle presence/absence signal S2 indicating the presence of an obstacle to the level crossing controller 2. When the control unit 20 determines that no obstacle is present in the level crossing RC (the monitor region Rm), that the environmental state is normal, and that the obstacle detection system 3 has not failed, the input/output unit 30 outputs the obstacle presence/absence signal S2 indicating the absence of an obstacle to the level crossing controller 2.

In the present embodiment, when at least one of the processing unit 21 and the processing unit 22 determines that an obstacle is present, that the environmental state is abnormal, or that the obstacle detection system 3 has failed, the input/output unit 30 outputs the obstacle presence/absence signal S2 indicating the presence of the obstacle to the level crossing controller 2. That is, when at least one of the obstacle signals ER1 and ER2, the environmental signals ENV1 and ENV2, and the failure signals FAIL1 and FAIL2 is in the OFF state, the input/output unit 30 outputs the obstacle presence/absence signal S2 indicating the presence of the obstacle to the level crossing controller 2.

When both the processing unit 21 and the processing unit 22 determine that no obstacle is present, that the environmental state is normal, and that the obstacle detection system 3 has not failed, the input/output unit 30 outputs the obstacle presence/absence signal S2 indicating the absence of an obstacle to the level crossing controller 2. That is, when all of the obstacle signals ER1 and ER2, the environmental signals ENV1 and ENV2, and the failure signals FAIL1 and FAIL2 are in the ON state, the input/output unit 30 outputs the obstacle presence/absence signal S2 indicating the absence of an obstacle to the level crossing controller 2.

Furthermore, when outputting the state signal S3 indicating abnormality of the obstacle detection system 3 (failure of the obstacle detection system 3) to the level crossing controller 2, the input/output unit 30 outputs the shutoff signal NEG to the power switch 40. In the present embodiment, when at least one of the processing unit 21 and the processing unit 22 determines that the obstacle detection system 3 has failed, the input/output unit 30 outputs the shutoff signal NEG to the power switch 40. That is, when at least one of the failure signal FAIL1 and the failure signal FAIL2 is in the OFF state, the input/output unit 30 outputs the shutoff signal NEG to the power switch 40.

Hereinafter, an example of a circuit configuration for realizing the above function of the input/output unit 30 will be described. In the present embodiment, the input/output unit 30 is configured as a relay circuit. In FIG. 5, each relay is illustrated as being divided into a coil and a switch for convenience.

The input/output unit 30 has a terminal T1a, a terminal T1b, a terminal T2a, a terminal T2b, a terminal T3a, a terminal T3b, a terminal T4a, and a terminal T4b. The terminal T1a and the terminal T1b are terminals for outputting the obstacle presence/absence signal S2. The terminal T2a and the terminal T2b are terminals for outputting the state signal S3. The terminal T3a and the terminal T3b are terminals for outputting an environmental state signal. The terminal T4a and the terminal T4b are terminals for receiving the start/stop signal S1. Each of the terminal T1a, the terminal T1b, the terminal T2a, the terminal T2b, the terminal T4a, and the terminal T4b is connected to the level crossing controller 2 via a signal line. Since no signal line is connected to the terminal T3a and the terminal T3b, the input/output unit 30 does not output the environmental state signal to the level crossing controller 2.

A coil Cer1 and a switch SWer1 constitute one relay. One end of the coil Cer1 is connected to the processing unit 21, and the other end of the coil Cer1 is connected to the power supply voltage. The obstacle signal ER1 is supplied from the processing unit 21 to the coil Cer1. When the obstacle signal ER1 is in the ON state, electric current flows through the coil Cer1, and a contact of the switch SWer1 is switched. When the obstacle signal ER1 is in the OFF state, no electric current flows through the coil Cer1. The switch SWer1 is an a-contact switch. Thus, when the obstacle signal ER1 is in the ON state, the switch SWer1 is in the ON state, and when the obstacle signal ER1 is in the OFF state, the switch SWer1 is in the OFF state.

One relay is constituted of a coil Cfail1, a switch SWfail1a, a switch SWfail1b, and a switch SWfail1c. One end of the coil Cfail1 is connected to the processing unit 21, and the other end of the coil Cfail1 is connected to the power supply voltage. The failure signal FAIL1 is supplied from the processing unit 21 to the coil Cfail1. When the failure signal FAIL1 is in the ON state, electric current flows through the coil Cfail1, and contacts of the switches SWfail1a, SWfail1b, and SWfail1c are switched. When the failure signal FAIL1 is in the OFF state, no electric current flows through the coil Cfail1.

The switches SWfail1a and SWfail1b are both a-contact switches. Thus, when the failure signal FAIL1 is in the ON state, the switches SWfail1a and SWfail1b are both in the ON state, and when the failure signal FAIL1 is in the OFF state, the switches SWfail1a and SWfail1b are both in the OFF state. The switch SWfail1c is a b-contact switch. Thus, when the failure signal FAIL1 is in the ON state, the switch SWfail1c is in the OFF state, and when the failure signal FAIL1 is in the OFF state, the switch SWfail1c is in the ON state.

One relay is constituted of a coil Cenv1, a switch SWenv1a, and a switch SWenv1b. One end of the coil Cenv1 is connected to the processing unit 21, and the other end of the coil Cenv1 is connected to the power supply voltage. The environmental signal ENV1 is supplied from the processing unit 21 to the coil Cenv1. When the environmental signal ENV1 is in the ON state, electric current flows through the coil Cenv1, and contacts of the switches SWenv1a and SWenv1b are switched. When the environmental signal ENV1 is in the OFF state, no electric current flows through the coil Cenv1. The switches SWenv1a and SWenv1b are both a-contact switches. Thus, when the environmental signal ENV1 is in the ON state, the switches SWenv1a and SWenv1b are both in the ON state, and when the environmental signal ENV1 is in the OFF state, the switches SWenv1a and SWenv1b are both in the OFF state.

A coil Cer2 and a switch SWer2 constitute one relay. One end of the coil Cer2 is connected to the processing unit 22, and the other end of the coil Cer2 is connected to the power supply voltage. The obstacle signal ER2 is supplied from the processing unit 22 to the coil Cer2. When the obstacle signal ER2 is in the ON state, electric current flows through the coil Cer2, and a contact of the switch SWer2 is switched. When the obstacle signal ER2 is in the OFF state, no electric current flows through the coil Cer2. The switch SWer2 is an a-contact switch. Thus, when the obstacle signal ER2 is in the ON state, the switch SWer2 is in the ON state, and when the obstacle signal ER2 is in the OFF state, the switch SWer2 is in the OFF state.

One relay is constituted of a coil Cfail2, a switch SWfail2a, a switch SWfail2b, and a switch SWfail2c. One end of the coil Cfail2 is connected to the processing unit 22, and the other end of the coil Cfail2 is connected to the power supply voltage. The failure signal FAIL2 is supplied from the processing unit 22 to the coil Cfail2. When the failure signal FAIL2 is in the ON state, electric current flows through the coil Cfail2, and contacts of the switches SWfail2a and SWfail2b are switched. When the failure signal FAIL2 is in the OFF state, no electric current flows through the coil Cfail2.

The switches SWfail2a and SWfail2b are both a-contact switches. Thus, when the failure signal FAIL2 is in the ON state, the switches SWfail2a and SWfail2b are both in the ON state, and when the failure signal FAIL2 is in the OFF state, the switches SWfail2a and SWfail2b are both in the OFF state. The switch SWfail2c is a b-contact switch. Thus, when the failure signal FAIL2 is in the ON state, the switch SWfail2c is in the OFF state, and when the failure signal FAIL2 is in the OFF state, the switch SWfail2c is in the ON state.

One relay is constituted of a coil Cenv2, a switch SWenv2a, and a switch SWenv2b. One end of the coil Cenv2 is connected to the processing unit 22, and the other end of the coil Cenv2 is connected to the power supply voltage. The environmental signal ENV2 is supplied from the processing unit 22 to the coil Cenv2. When the environmental signal ENV2 is in the ON state, electric current flows through the coil Cenv2, and contacts of the switches SWenv2a and SWenv2b are switched. When the environmental signal ENV2 is in the OFF state, no electric current flows through the coil Cenv2. The switches SWenv2a and SWenv2b are both a-contact switches. Thus, when the environmental signal ENV2 is in the ON state, the switches SWenv2a and SWenv2b are both in the ON state, and when the environmental signal ENV2 is in the OFF state, the switches SWenv2a and SWenv2b are both in the OFF state.

One relay is constituted of a coil Cstr, a switch SWstra, and a switch SWstrb. One end of the coil Cstr is connected to the terminal T4a, and the other end of the coil Cstr is connected to the terminal T4b. The start/stop signal S1 is supplied from the level crossing controller 2 to the coil Cstr. When the start/stop signal S1 is in the ON state, electric current flows through the coil Cstr, and contacts of the switches SWstra and SWstrb are switched. When the start/stop signal S1 is in the OFF state, no electric current flows through the coil Cstr. The switches SWstra and SWstrb are both a-contact switches. Thus, when the start/stop signal S1 is in the ON state, the switches SWstra and SWstrb are both in the ON state, and when the start/stop signal S1 is in the OFF state, the switches SWstra and SWstrb are both in the OFF state.

The input/output unit 30 includes an interface unit 31 for transmitting and receiving signals to and from the level crossing controller 2, and a cutoff unit 32 for cutting off electric power supply. The interface unit 31 includes the coil Cstr, a generation circuit 33, a generation circuit 34, and a generation circuit 35.

As described above, the coil Cstr is a circuit that receives the start/stop signal S1. One end of the switch SWstra is connected to the processing unit 21, and the other end of the switch SWstra is connected to a ground potential. One end of the switch SWstrb is connected to the processing unit 22, and the other end of the switch SWstrb is connected to a ground potential. Thus, when the start/stop signal S1 is in the ON state, the switches SWstra and SWstrb are both in the ON state, so that the voltage levels of the start signals STR1 and STR2 are low levels, and the start signals STR1 and STR2 indicate start. On the other hand, when the start/stop signal S1 is in the OFF state, the switches SWstra and SWstrb are both in the OFF state, so that the voltage levels of the start signals STR1 and STR2 are high levels, and the start signals STR1 and STR2 indicate stop.

The generation circuit 33 is a circuit that generates the obstacle presence/absence signal S2. The generation circuit 33 includes a switch SWer1, a switch SWfail1a, a switch SWenv1a, a switch SWer2, a switch SWfail2a, and a switch SWenv2a, and is a series circuit in which the switch SWer1, the switch SWfail1a, the switch SWenv1a, the switch SWenv2a, the switch SWfail2a, and the switch SWer2 are connected in series in that order. One end of the generation circuit 33 (one end of the switch SWer1) is connected to the terminal T1a, and the other end of the generation circuit 33 (the other end of the switch SWer2) is connected to the terminal T1b.

When the environmental signals ENV1 and ENV2, the failure signals FAIL1 and FAIL2, and the obstacle signals ER1 and ER2 are all in the ON state, the switches SWer1, SWfail1a, SWenv1a, SWenv2a, SWfail2a, and SWer2 are all in the ON state, so that the continuity (electrical short-circuit) between the terminal T1a and the terminal T1b of the generation circuit 33 is achieved. As described above, when the continuity (closed state) between the terminal T1a and the terminal T1b is achieved, the obstacle presence/absence signal S2 indicates the absence of an obstacle.

On the other hand, when at least one of the environmental signals ENV1 and ENV2, the failure signals FAIL1 and FAIL2, and the obstacle signals ER1 and ER2 is in the OFF state, at least one of the switches SWer1, SWfail1a, SWenv1a, SWenv2a, SWfail2a, and SWer2 is in the OFF state, so that the generation circuit 33 is interrupted, and the terminal T1a and the terminal T1b are electrically disconnected from each other. As described above, when the terminal T1a and the terminal T1b are disconnected from each other (open state), the obstacle presence/absence signal S2 indicates the presence of an obstacle.

The generation circuit 34 is a circuit that generates the state signal S3. The generation circuit 34 includes the switch SWfail1b and the switch SWfail2b, and is a series circuit in which the switch SWfail1b and the switch SWfail2b are connected in series in that order. One end of the generation circuit 34 (one end of the switch SWfail1b) is connected to the terminal T2a, and the other end of the generation circuit 34 (the other end of the switch SWfail2b) is connected to the terminal T2b.

When the failure signals FAIL1 and FAIL2 are both in the ON state, the switches SWfail1b and SWfail2b are in the ON state, so that the continuity (electrical short-circuit) between the terminal T2a and the terminal T2b of the generation circuit 34 is achieved. As described above, when the continuity (closed state) between the terminal T2a and the terminal T2b is achieved, the state signal S3 indicates that the state of the obstacle detection system 3 is normal. On the other hand, when at least one of the failure signals FAIL1 and FAIL2 is in the OFF state, at least one of the switches SWfail1b and SWfail2b is in the OFF state, so that the generation circuit 34 is interrupted, and the terminal T2a and the terminal T2b are electrically disconnected from each other. As described above, when the terminal T2a and the terminal T2b are disconnected from each other (open state), the state signal S3 indicates that the state of the obstacle detection system 3 is abnormal.

The generation circuit 35 is a circuit that generates the environmental state signal. The generation circuit 35 includes the switch SWenv1b and the switch SWenv2b, and is a series circuit in which the switch SWenv1b and the switch SWenv2b are connected in series in that order. One end of the generation circuit 35 (one end of the switch SWenv1b) is connected to the terminal T3a, and the other end of the generation circuit 35 (the other end of the switch SWenv2b) is connected to the terminal T3b.

When the environmental signals ENV1 and ENV2 are both in the ON state, the switches SWenv1b and SWenv2b are both in the ON state, so that the continuity (electrical short-circuit) between the terminal T3a and the terminal T3b of the generation circuit 35 is achieved. As described above, when the continuity (closed state) between the terminal T3a and the terminal T3b is achieved, the environmental state signal indicates that the environmental state inside the level crossing RC is normal. On the other hand, when at least one of the environmental signals ENV1 and ENV2 is in the OFF state, at least one of the switches SWenv1b and SWenv2b is in the OFF state, so that the generation circuit 35 is interrupted, and the terminal T3a and the terminal T3b are electrically disconnected from each other. As described above, when the terminal T3a and the terminal T3b are disconnected from each other (open state), the environmental state signal indicates that the environmental state inside the level crossing RC is abnormal.

The cutoff unit 32 includes a coil Cneg, a switch SWneg, a switch SWfail1c, and a switch SWfail2c. The switch SWfail1c and the switch SWfail2c are connected in parallel, one ends of the switch SWfail1c and the switch SWfail2c are connected to the power supply voltage, and the other ends of the switch SWfail1c and the switch SWfail2c are connected to the ground potential via the coil Cneg. One end of the switch SWneg is connected to the power supply voltage, and the other end of the switch SWneg is connected to the power switch 40. The coil Cneg and the switch SWneg constitute one relay. When electric current flows through the coil Cneg, a contact of the switch SWneg is switched. The switch SWneg is an a-contact switch.

When the failure signals FAIL1 and FAIL2 are both in the ON state, the switches SWfail1c and SWfail2c are in the OFF state, so that no electric current flows through the coil Cneg, and the switch SWneg is in the OFF state. Thus, the shutoff signal NEG is not supplied to the power switch 40. On the other hand, when at least one of the failure signals FAIL1 and FAIL2 is in the OFF state, at least one of the switches SWfail1c and SWfail2c is in the ON state, so that electric current flows through the coil Cneg, and the switch SWneg turns into the ON state. Consequently, the shutoff signal NEG is supplied to the power switch 40. That is, when at least one of the processing unit 21 and the processing unit 22 determines that the obstacle detection system 3 has failed, the power switch 40 is switched to the OFF state.

In the obstacle detection system 3 configured as described above, the start/stop signal S1 indicating start is output from the level crossing controller 2, whereby the obstacle detection processing inside the level crossing RC is started. Specifically, the detection unit 10 applies the laser light L1 to the detection region Rd so as to scan the detection region Rd in the main scanning direction and the sub scanning direction, and receives the reflected light L2 from the detection region Rd. The detection region Rd includes the monitor region Rm set inside the level crossing RC and the reflector 52 (mirror surface 52a). The control unit 20 determines, based on the reflected light L2 reflected by the monitor region Rm, whether or not an obstacle is present in the monitor region Rm, and determines the environmental state inside the level crossing RC based on the reflected light L2 reflected by the mirror surface 52a. The detection unit 10 allows the laser light, reflected by the polygon mirror 12a, to enter at one end 15a of the internal optical path 15 and receives the emitted light emitted from the other end 15b by the light receiving element 14b. The control unit 20 determines whether or not the detection unit 10 has failed based on the emitted light.

When the control unit 20 determines that the obstacle detection system 3 has failed, the input/output unit 30 outputs the state signal S3, indicating abnormality of the obstacle detection system 3 (failure of the obstacle detection system 3) to the level crossing controller 2. When the control unit 20 determines that an obstacle is present, that the environmental state is abnormal, or that the obstacle detection system 3 is abnormal, the input/output unit 30 outputs the obstacle presence/absence signal S2 indicating the presence of the obstacle to the level crossing controller 2.

As described above, in the obstacle detection system 3, in a case where the laser light L1 is applied to the reflector 52 (mirror surface 52a) set at the level crossing RC, the environmental state inside the level crossing RC is determined based on the reflected light L2 of the laser light L1, and the environmental state is determined to be abnormal, the obstacle presence/absence signal S2 indicating the presence of an obstacle is output to the level crossing controller 2. As described above, abnormality of the environmental state is output to the level crossing controller 2 as the presence of the obstacle, not as a failure of the obstacle detection system 3. When the obstacle presence/absence signal S2 is output, it is not required to cut off the electric power supply to the obstacle detection system 3, so that the obstacle detection system 3 can continue to operate even when the environmental state inside the level crossing RC deteriorates.

The detection region Rd includes the monitor region Rm and the reflector 52. Thus, by applying the laser light L1 so as to scan the detection region Rd, it is possible to determine the presence/absence of an obstacle and the environmental state inside the level crossing RC.

The detection unit 10 has the internal optical path 15 capable of propagating the laser light, allows the laser light to enter at one end 15a of the internal optical path 15, and receives the emitted light emitted from the other end 15b of the internal optical path 15. The control unit 20 determines whether or not the detection unit 10 has failed based on the emitted light. Consequently, it is possible to determine a failure of the detection unit 10, such as insufficient laser light intensity.

When the detection unit 10 has failed, the detection unit 10 may not be able to accurately determine the environmental state inside the level crossing RC. Thus, when it is determined that the detection unit 10 has not failed, the environmental state inside the level crossing RC is determined, so that it is possible to improve determination accuracy of the environmental state inside the level crossing RC.

When the control unit 20 determines that the obstacle detection system 3 has failed, the input/output unit 30 outputs the state signal S3 indicating abnormality of the state of the obstacle detection system 3 (failure of the obstacle detection system 3) to the outside. Consequently, the failure of the obstacle detection system 3 can be notified to the level crossing controller 2.

When the state of the obstacle detection system 3 is abnormal, the obstacle detection system 3 may malfunction. On the other hand, the power switch 40 is switched to the OFF state when the input/output unit 30 outputs the state signal S3 indicating abnormality of the state of the obstacle detection system 3 (failure of the obstacle detection system 3), and the electric power supply to the obstacle detection system 3 is cut off. Thus, a malfunction of the obstacle detection system 3 can be prevented.

The obstacle detection system according to the present disclosure is not limited to the above embodiment.

For example, the obstacle detection system 3 may include a detection unit that applies the laser light to the reflector 52 and receives reflected light, in addition to the detection unit 10.

Since the obstacle detection system 3 does not output the environmental state signal to the level crossing controller 2, the generation circuit 35 and the terminals T3a and T3b may be omitted. Consequently, the obstacle detection system 3 can be simplified.

The control unit 20 does not have to be duplicated and does not have to include the processing unit 22.

The input/output unit 30 is not limited to the circuit configuration illustrated in FIG. 5. The function of the input/output unit 30 may be realized by a logic circuit or software.

In the above embodiment, although the detection unit 10, the control unit 20, and the input/output unit 30 are separately provided, the detection unit 10, the control unit 20, and the input/output unit 30 may be integrally configured.

### Reference Signs List

- 1: Level crossing control system

- 2: Level crossing controller (outside)
- 3: Obstacle detection system
- 10: Detection unit
- 15: Internal optical path (internal path)
- 15a: One end (first end)
- 15b: Other end (second end)
- 20: Control unit
- 21: Processing unit
- 22: Processing unit
- 30: Input/output unit (output unit)
- 40: Power switch
- 52: Reflector
- 52a: Mirror surface
- L1: Laser light (electromagnetic wave)
- L2: Reflected light (reflected wave)
- PS: Power supply
- RC: Level crossing
- Rd: Detection region
- Rm: Monitor region

## Claims

1. An obstacle detection system (3) for detecting an obstacle inside a level crossing, comprising:
a detection unit (10) configured to apply an electromagnetic wave to a reflector (52) installed at the level crossing and receive a reflected wave of the electromagnetic wave;
a control unit (20) configured to determine an environmental state inside the level crossing based on the reflected wave; and
an output unit (30) configured to output an obstacle presence signal indicating presence of the obstacle or an obstacle absence signal indicating the absence of the obstacle to an outside, wherein:
the detection unit (10) is configured to apply the electromagnetic wave to a detection region including a monitor region set inside the level crossing and the reflector (52) so as to scan the detection region in a main scanning direction and a sub scanning direction and receive the reflected wave,
the control unit (20) is configured to determine whether or not an obstacle is present in the monitor region based on the reflected wave from the monitor region,
the output unit (30) is configured to output the obstacle presence signal when the control unit (20) determines that the obstacle is present,
the detection unit (10) has an internal path (15) configured to propagate the electromagnetic wave,
the detection unit (10) is configured to allow the electromagnetic wave to enter at a first end (15a) of the internal path (15) and receive an emitted wave emitted from a second end (15b) of the internal path (15) for each main scan, and
the control unit (20) is configured to determine whether or not the detection unit (10) has failed based on the emitted wave.

2. The obstacle detection system (3) according to claim 1, wherein the control unit (20) is configured to determine the environmental state when determining that the detection unit (10) has not failed.

3. The obstacle detection system (3) according to claim 1 or 2, wherein the control unit (20) is configured to determine whether or not the obstacle detection system (3) has failed, and
when the control unit (20) determines that the obstacle detection system (3) has failed, the output unit (30) is configured to output a state signal indicating a failure of the obstacle detection system (3) to the outside.

4. The obstacle detection system (3) according to claim 3, further comprising
a power switch (40) for switching between
an ON state in which electric power is supplied to the obstacle detection system (3) and
an OFF state in which the electric power supply to the obstacle detection system (3) is cut off,
wherein the power switch (40) is switched to the OFF state when the output unit (30) outputs the state signal.

5. The obstacle detection system (3) according to any one of claims 1 to 4, wherein the detection unit (10) is configured to emit laser light (L1) as the electromagnetic wave.

## Patentansprüche

1. Hindernisdetektionssystem (3) zum Detektieren eines Hindernisses innerhalb eines Bahnübergangs, aufweisend:
eine Detektionseinheit (10), die eingerichtet ist, eine elektromagnetische Welle auf einen Reflektor (52) anzuwenden, der an dem Bahnübergang installiert ist, und eine reflektierte Welle der elektromagnetischen Welle zu empfangen;
eine Steuereinheit (20), die eingerichtet ist, basierend auf der reflektierten Welle einen Umgebungszustand innerhalb des Bahnübergangs zu bestimmen; und
eine Ausgabeeinheit (30), die eingerichtet ist, ein Hindernispräsenzsignal, das die Präsenz des Hindernisses anzeigt, oder ein Hindernisabwesenheitssignal, das die Abwesenheit des Hindernisses anzeigt, nach außen auszugeben, wobei:
die Detektionseinheit (10) eingerichtet ist, die elektromagnetische Welle auf eine Detektionsregion einschließlich einer Überwachungsregion, die innerhalb des Bahnübergangs und des Reflektors (52) eingestellt ist, anzuwenden, um die Detektionsregion in einer Hauptabtastrichtung und einer Unterabtastrichtung abzutasten und die reflektierte Welle zu empfangen,
die Steuereinheit (20) eingerichtet ist, basierend auf der reflektierten Welle von der Überwachungsregion zu bestimmen, ob ein Hindernis in der Überwachungsregion vorhanden ist oder nicht,
die Ausgabeeinheit (30) eingerichtet ist, das Hindernispräsenzsignal auszugeben, wenn die Steuereinheit (20) bestimmt, dass das Hindernis vorhanden ist,
die Detektionseinheit (10) einen internen Pfad (15) aufweist, der eingerichtet ist, die elektromagnetische Welle auszubreiten,
die Detektionseinheit (10) eingerichtet ist, es der elektromagnetischen Welle zu ermöglichen, an einem ersten Ende (15a) des internen Pfads (15) einzutreten und eine von einem zweiten Ende (15b) des internen Pfads (15) emittierte Welle für jede Hauptabtastung zu empfangen, und
die Steuereinheit (20) eingerichtet ist, basierend auf der emittierten Welle zu bestimmen, ob die Detektionseinheit (10) versagt hat oder nicht.

2. Hindernisdetektionssystem (3) nach Anspruch 1, wobei die Steuereinheit (20) eingerichtet ist, den Umgebungszustand zu bestimmen, wenn bestimmt wird, dass die Detektionseinheit (10) nicht versagt hat.

3. Hindernisdetektionssystem (3) nach Anspruch 1 oder 2, wobei die Steuereinheit (20) eingerichtet ist, zu bestimmen, ob das Hindernisdetektionssystem (3) versagt hat oder nicht, und
wenn die Steuereinheit (20) bestimmt, dass das Hindernisdetektionssystem (3) versagt hat, die Ausgabeeinheit (30) eingerichtet ist, ein Zustandssignal, das ein Versagen des Hindernisdetektionssystems (3) anzeigt, nach außen auszugeben.

4. Hindernisdetektionssystem (3) nach Anspruch 3, ferner aufweisend
einen Leistungsschalter (40) zum Umschalten zwischen
einem EIN-Zustand, in dem das Hindernisdetektionssystem (3) mit elektrischer Leistung versorgt wird, und
einem AUS-Zustand, in dem die elektrische Leistungsversorgung zu dem Hindernisdetektionssystem (3) unterbrochen ist,
wobei der Leistungsschalter (40) in den AUS-Zustand geschaltet wird, wenn die Ausgabeeinheit (30) das Zustandssignal ausgibt.

5. Hindernisdetektionssystem (3) nach einem der Ansprüche 1 bis 4, wobei die Detektionseinheit (10) eingerichtet ist, Laserlicht (L1) als die elektromagnetische Welle zu emittieren.

## Revendications

1. Système de détection d'obstacle (3) pour détecter un obstacle à l'intérieur d'un passage à niveau, comprenant :
une unité de détection (10) configurée pour appliquer une onde électromagnétique à un réflecteur (52) installé sur le passage à niveau et recevoir une onde réfléchie de l'onde électromagnétique ;
une unité de commande (20) configurée pour déterminer un état environnemental à l'intérieur du passage à niveau en se basant sur l'onde réfléchie ; et
une unité de sortie (30) configurée pour émettre un signal de présence d'obstacle indiquant la présence de l'obstacle ou un signal d'absence d'obstacle indiquant l'absence de l'obstacle vers un extérieur, dans lequel ;
l'unité de détection (10) est configurée pour appliquer l'onde électromagnétique à une région de détection incluant une région de surveillance disposée à l'intérieur du passage à niveau et du réflecteur (52) de façon à balayer la région de détection dans une direction de balayage principale et une direction de sous-balayage et recevoir l'onde réfléchie,
l'unité de commande (20) est configurée pour déterminer si oui ou non un obstacle est présent dans la région de surveillance en se basant sur l'onde réfléchie depuis la région de surveillance,
l'unité de sortie (30) est configurée pour émettre le signal de présence d'obstacle lorsque l'unité de commande (20) détermine que l'obstacle est présent, l'unité de détection (10) présente un trajet interne (15) configuré pour propager l'onde électromagnétique,
l'unité de détection (10) est configurée pour faire entrer l'onde électromagnétique à une première extrémité (15a) du trajet interne (15) et recevoir une onde émise d'une seconde extrémité (15b) du trajet interne (15) pour chaque balayage principal, et
l'unité de commande (20) est configurée pour déterminer si oui ou non l'unité de détection (10) a échoué en se basant sur l'onde émise.

2. Système de détection d'obstacle (3) selon la revendication 1, dans lequel l'unité de commande (20) est configurée pour déterminer l'état environnemental lorsqu'il est déterminé que l'unité de détection (10) n'a pas échoué.

3. Système de détection d'obstacle (3) selon la revendication 1 ou 2, dans lequel l'unité de commande (20) est configurée pour déterminer si oui ou non le système de détection d'obstacle (3) a échoué, et lorsque l'unité de commande (20) détermine que le système de détection d'obstacle (3) a échoué, l'unité de sortie (30) est configurée pour émettre un signal d'état indiquant un échec du système de détection d'obstacle (3) vers l'extérieur.

4. Système de détection d'obstacle (3) selon la revendication 3, comprenant en outre
un commutateur (40) pour commuter entre
un état ON dans lequel du courant électrique est fourni au système de détection d'obstacle (3) et
un état OFF dans lequel l'alimentation de courant électrique vers le système de détection d'obstacle (3) est coupée,
dans lequel le commutateur (40) est commuté à l'état OFF lorsque l'unité de sortie (30) émet le signal d'état.

5. Système de détection d'obstacle (3) selon l'une quelconque des revendications 1 à 4, dans lequel l'unité de détection (10) est configurée pour émettre de la lumière laser (L1) en tant que l'onde électromagnétique.
